# EUROPEAN PATENT APPLICATION

(11) **EP 4 371 759 A1**
(43) Date of publication of application: **22.05.2024**
(21) Application number: 23206334.7
(22) Date of filing: 27.10.2023
(51) Int. Cl.: B32B 5/18, B32B 7/12

(54) **PASSIVE FIRE-RESISTANT STRUCTURES**

(30) Priority: 16.11.2022 GB 202217123
(71) Applicant: Advanced Innergy Ltd, Gloucester, GL2 4PA (GB)
(72) Inventor: Palman, Riccardo, Gloucester, GL2 4PA (GB)
(74) Representative: Swindell & Pearson Limited

(57) **Abstract**

A passive fire-resistant structure for a substrate. The structure comprises a tie coat bonded to the substrate and a passive fire-resistant foam layer bonded to the tie coat. The passive fire-resistant foam layer is the reaction product of a first material comprising a bio-based resin and a second material comprising a hardener.

## Description

### FIELD OF THE INVENTION

Embodiments of the present invention relate to passive fire-resistant structures for substrates, and particularly but not exclusively to passive fire-resistant structures for fabricating substrates to be resistant to fires and the intense heat emanating from combustion of crude oil or natural gas in case of an incident.

### BACKGROUND TO THE INVENTION

On-shore and off-shore substrates relating to and associated with the extraction and processing of crude oil or natural gas require protection from fires and the intense heat emanating from combustion of these materials. Substrates requiring protection include a large range of equipment, under decks, bulkheads, heat exchangers, vessels, pipes, saddles and skirts, welding nodes, hot risers, enclosures for riser clamps, emergency shut down valves (ESDVs), and flanges.

Phenolic resins are synthetic resins made from the polymerization of phenol (C6H5OH) and formaldehyde (CH2C=O). Repeating units of -[(C6H3OH)-CH2]- with methylene (-CH2-) connections linking carbon sites to the phenolic hydroxide (-OH) group make up the polymer. Accordingly, phenolic resins are formaldehyde-phenol copolymers.

Passive fire-resistant structures based on phenolic resins are known. However, there are significant environmental and health and safety concerns with the use of phenolic resins. There is, therefore, a need to address this shortcoming.

### BRIEF DESCRIPTION OF VARIOUS EMBODIMENTS OF THE INVENTION

According to a first aspect of the present disclosure, there is provided a passive fire-resistant structure for a substrate, the structure comprising:
a tie coat bonded to the substrate; and
a passive fire-resistant foam layer bonded to the tie coat, wherein the passive fire-resistant foam layer is the reaction product of a first material comprising a bio-based resin and a second material comprising a hardener.

The passive fire-resistant foam layer first material may comprise from 45 to 85 %(w/w) of the bio-based resin, or preferably may comprise from 55 to 80 %(w/w) of the bio-based resin, or most preferably may comprise from 65 to 75 %(w/w) of the bio-based resin.

The passive fire-resistant foam layer second material may comprise from 50 to 100 %(w/w) of the hardener. In some examples, the passive fire-resistant foam layer second material may comprise from 40 to 80 %(w/w) of the hardener, or preferably may comprise from 50 to 70 %(w/w) of the hardener, or most preferably may comprise from 55 to 65 %(w/w) of the hardener. In other examples, the passive fire-resistant foam layer second material may comprise from 90 to 100 %(w/w) of the hardener.

The passive fire-resistant foam layer second material may comprise a cure accelerator. The cure accelerator may be para toluene sulphonic acid. The passive fire-resistant foam layer second material may comprise up to 40 %(w/w) para toluene sulphonic acid as a cure accelerator, or may comprise from 5 to 35 %(w/w) para toluene sulphonic acid as a cure accelerator, or preferably may comprise from 10 to 30 %(w/w) para toluene sulphonic acid as a cure accelerator, or most preferably may comprise from 15 to 25 %(w/w) para toluene sulphonic acid as a cure accelerator.

The passive fire-resistant foam layer second material may comprise a flame retardant. The flame retardant may be boric acid. The passive fire-resistant foam layer second material may comprise up to 40 %(w/w) boric acid as a flame retardant, or may comprise from 5 to 35 %(w/w) boric acid as a flame retardant, or preferably may comprise from 10 to 30 %(w/w) boric acid as a flame retardant, or most preferably may comprise from 15 to 25 %(w/w) boric acid as a flame retardant.

The passive fire-resistant foam layer first material may comprise an amino functional silane coupling agent. The passive fire-resistant foam layer first material may comprise up to 2 %(w/w) of the amino functional silane coupling agent, or preferably may comprise from 0.2 to 1.5 %(w/w) of the amino functional silane coupling agent, or most preferably may comprise from 0.5 to 1 %(w/w) of the amino functional silane coupling agent.

The passive fire-resistant foam layer first material may comprise a reinforcing agent. The reinforcing agent may be glass strands. The passive fire-resistant foam layer first material may comprise up to 5 %(w/w) glass strands, or preferably may comprise from 0.5 to 3 %(w/w) glass strands, or most preferably may comprise from 1.5 to 2.5 %(w/w) glass strands. The glass strands may be from 3 to 12 mm long, or preferably may be from 5 to 7 mm long.

The passive fire-resistant foam layer first material may comprise an inorganic fibre matrix. The passive fire-resistant foam layer first material may comprise up to 5 %(w/w) inorganic fibre matrix, or preferably may comprise from 0.5 to 3 %(w/w) inorganic fibre matrix, or most preferably may comprise from 1 to 2 %(w/w) inorganic fibre matrix. The inorganic fibre matrix may comprise from 70 to 80 %(w/w) silica and from 18 to 25 %(w/w) calcium oxide and magnesium oxide.

The passive fire-resistant foam layer first material may comprise hollow microspheres. The passive fire-resistant foam layer first material may comprise from 10 to 30 %(w/w) hollow microspheres, or preferably may comprise from 15 to 25 %(w/w) hollow microspheres, or most preferably may comprise from 18 to 23 %(w/w) hollow microspheres. The hollow microspheres may comprise hollow glass microspheres. The hollow microspheres may comprise a mixture of hollow glass microspheres and hollow polymer microspheres. Possibly, the majority of the hollow microspheres are hollow glass microspheres. Possibly, up to 20 %(w/w) of the hollow microspheres are hollow polymer microspheres, or possibly up to 10 %(w/w) of the hollow microspheres are hollow polymer microspheres, or possibly from 5 to 10 %(w/w) of the hollow microspheres are hollow polymer microspheres. The polymer hollow microspheres may comprise hollow thermoplastic microspheres.

The passive fire-resistant foam layer first material may comprise smoke suppressor. The passive fire-resistant foam layer first material may comprise up to 15 %(w/w) of a smoke suppressor, or preferably may comprise from 3 to 12 %(w/w) smoke suppressor, or most preferably may comprise from 5 to 8 %(w/w) smoke suppressor. The smoke suppressor may be triethyl phosphate (TEP) .

The passive fire-resistant foam layer first material may comprise a surfactant. The passive fire-resistant foam layer first material may comprise from 0.2 to 5 %(w/w) surfactant, or preferably may comprise from 0.5 to 3 %(w/w) surfactant, or most preferably may comprise from 1 to 2 %(w/w) surfactant. The surfactant may comprise a fluorinated surfactant. The passive fire-resistant foam layer first material may comprise from 0.2 to 5 %(w/w) fluorinated surfactant.

The ratio of passive fire-resistant foam layer first material to second material may be from 2:1 to 8:1, or preferably may be from 2:1 to 7:1, or most preferably may be from 3:1 to 5:1.

The tie coat may be the reaction product of a first material comprising a bio-based resin and a second material comprising a hardener.

The tie coat first material may comprise from 40 to 80 %(w/w) of the bio-based resin, or preferably may comprise from 50 to 75 %(w/w) of the bio-based resin, or most preferably may comprise from 65 to 70 %(w/w) of the bio-based resin.

The tie coat second material may comprise from 90 to 98 %(w/w) of the hardener.

The tie coat second material may comprise up to 1 %(w/w) para toluene sulphonic acid as a cure accelerator.

The tie coat first material may comprise an amino functional silane coupling agent. The tie coat first material may comprise up to 2.5 %(w/w) of the amino functional silane coupling agent, or preferably may comprise from 0.5 to 2.5 %(w/w) of the amino functional silane coupling agent, or most preferably may comprise from 1 to 2 %(w/w) of the amino functional silane coupling agent.

The tie coat first material may comprise a plasticiser. The tie coat first material may comprise up to 2 %(w/w) plasticiser. The plasticiser may comprise ethanediol.

The tie coat first material may comprise an anti-cissing agent. The tie coat first material may comprise up to 2 %(w/w) anti-cissing agent.

The tie coat first material may comprise fumed silica. The tie coat first material may comprise from 1 to 4 %(w/w) fumed silica.

The tie coat first material may comprise microspheres. The microspheres of the tie coat first material may be solid. The tie coat first material may comprise from 15 to 30 %(w/w) microspheres, or preferably may comprise from 23 to 28 %(w/w) microspheres. The microspheres may comprise glass microspheres and/or polymer microspheres.

The tie coat second material may comprise up to 10 %(w/w) water.

The ratio of tie coat first material to second material may be from 5:1 to 10:1.

The passive fire-resistant structure may comprise an outer protective layer bonded to the passive fire-resistant foam layer. The outer protective layer may be the reaction product of a first material comprising a bio-based resin and a second material comprising a hardener.

The outer protective layer first material may comprise from 50 to 100 %(w/w) of the bio-based resin, or preferably may comprise from 93 to 99 %(w/w) of the bio-based resin.

The outer protective layer second material may comprise up to 100 %(w/w) of the hardener, or may comprise 100 %(w/w).

The outer protective layer first material may comprise an amino functional silane coupling agent. The outer protective layer first material may comprise up to 2.5 %(w/w) of the amino functional silane coupling agent, or preferably may comprise from 0.5 to 2.5 %(w/w) of the amino functional silane coupling agent, or most preferably may comprise from 1 to 2 %(w/w) of the amino functional silane coupling agent.

The outer protective layer first material may comprise a plasticiser. The outer protective layer first material may comprise up to 1 %(w/w) plasticiser. The plasticiser may comprise ethanediol.

The outer protective layer first material may comprise fumed silica. The outer protective layer first material may comprise up to 4 %(w/w) fumed silica.

The ratio of outer protective layer first material to second material may be from 10:1 to 20:1.

Fibre reinforcement may be comprised in the outer protective layer. The fibres may be of glass, Kevlar or carbon.

The bio-based resin may be plant based. The bio-based resin may be derived from a plant or plants. The bio-based resin may be substantially derived from a plant or plants. The bio-based resin may be exclusively derived from a plant or plants. The bio-based resin may be a 100% derived from a plant or plants. The bio-based resin may be free from synthetic materials.

Possibly, the bio-based resin comprised in the passive fire-resistant foam layer first material is a polyfurfuryl alcohol resin and the hardener comprised in the passive fire-resistant foam layer second material is a partial phosphate ester.

Possibly, the bio-based resin comprised in the tie coat first material is a polyfurfuryl alcohol resin and the hardener comprised in the tie coat second material is a partial phosphate ester.

Possibly, the bio-based resin comprised in the outer protective layer first material is a polyfurfuryl alcohol resin and the hardener comprised in the outer protective layer second material is a partial phosphate ester.

Possibly, the bio-based resin comprised in the passive fire-resistant foam layer first material is a lignin biopolymer resin and the hardener comprised in the passive fire-resistant foam layer second material is an epoxy-based hardener.

Possibly, the bio-based resin comprised in the tie coat first material is a lignin biopolymer resin and the hardener comprised in the tie coat second material is an epoxy-based hardener.

Possibly, the bio-based resin comprised in the outer protective layer first material is a lignin biopolymer resin and the hardener comprised in the outer protective layer second material is an epoxy-based hardener.

The epoxy-based hardener may be 1,2,3-Propantriol, homopolymer, 2-oxiranylmethyl ether.

According to a second aspect of the present disclosure there is provided a method of applying a passive fire-resistant structure to a substrate, the method comprising:
applying a tie coat to the substrate; and
applying a passive fire-resistant foam layer to the tie coat, wherein the passive fire-resistant foam layer is the reaction product of a first material comprising a bio-based resin and a second material comprising a hardener.

The method may comprise applying an outer protective layer to the passive fire-resistant foam layer.

According to a third aspect of the present disclosure there is provided a substrate having a passive fire-resistant structure thereon, wherein the passive fire-resistant structure comprises:
a tie coat bonded to the substrate; and
a passive fire-resistant foam layer bonded to the tie coat, wherein the passive fire-resistant foam layer is the reaction product of a first material comprising a bio-based resin and a second material comprising a hardener.

The passive fire-resistant structure may comprise an outer protective layer bonded to the passive fire-resistant foam layer.

### DETAILED DESCRIPTION OF VARIOUS EMBODIMENTS OF THE INVENTION

Embodiments of the present disclosure will now be described by way of example only.

Passive fire-resistant structures according to examples of the disclosure comprise a tie coat, i.e., an inner tie coat, bonded to a substrate, a passive fire-resistant foam layer bonded to the tie coat, and optionally an outer protective layer bonded to the passive fire-resistant foam layer. The outer protective layer may be a laminate. The tie coat may be flexible. The tie coat is provided between the passive fire-resistant foam layer and the substrate. The tie coat provides a transitional layer that bonds or improves the adhesion of the passive fire-resistant foam layer and the substrate. Accordingly, the tie coat ties these adjacent layers together.

The passive fire-resistant foam layer is the reaction product of a first material comprising a curable bio-based resin and a second material comprising a hardener.

Passive fire-resistant structures according to examples of the disclosure provide passive fire protection for on-shore and off-shore substrates relating to and associated with the extraction and processing of crude oil or natural gas.

A bio-based resin is a resin material intentionally made from substances derived from living (or once-living) organisms, for example a plant or plants. A bio-based resin is not a synthetic resin i.e., it is not manufactured by chemical synthesis. Bio-based resins, such as polyfurfuryl alcohol resin and lignin biopolymer, provide environmentally friendly alternatives to synthetic phenolic resins. Furthermore, bio-based resins, such as polyfurfuryl alcohol resin and lignin biopolymer, are considerably less harmful than phenolic resins and are therefore safer to use.

In this specification, a hardener is a curing agent, i.e., a component which increases the resilience of a mixture once it sets. A curing agent effects a curing process to form a solid polymeric composite network.

All proportions in this specification are expressed as weight percentages (%(w/w)).

### Passive fire-resistant structure (Example 1)

A passive fire-resistant structure was made up of a tie coat, a passive fire-resistant foam layer and an outer protective layer with the following constituents. First and second materials were formed, and mixed together in the following proportions.

### Tie coat

### First material (part A)

| **General term** | **Specific example** | **Quantity %(w/w)** |
|---|---|---|
| Bio-based resin | Polyfurfuryl alcohol (PFA) resin | 68.5 |
| Plasticiser | Ethanediol | 0.7 |
| Anti-cissing agent | Anti-cissing agent | 0.7 |
| Coupling agent | Amino functional silane coupling agent | 0.7 |
| Dispersion aid | Dispersion aid | 0.045 |
| Filler | Fumed silica | 3.1 |
| Reinforcing agent | Solid microspheres | 26 |

### Second material (part B)

| **General term** | **Specific example** | **Quantity %(w/w)** |
|---|---|---|
| Hardener | Partial phosphate ester | 94 |
| Cure accelerator | Para toluene sulphonic acid | 1 |
| | water | 5 |

In this example, the ratio of the first material to the second material (first material : second material) is 7:1. Accordingly, the formulation comprises 87.5 % of the first material and 12.5 % of the second material.

### Passive fire-resistant foam layer

### First material (part A)

| **General term** | **Specific example** | **Quantity %(w/w)** |
|---|---|---|
| Bio-based resin | PFA resin (polyfurfuryl alcohol) | 65.8 |
| Smoke suppressor | Triethyl phosphate (TEP) | 6.3 |
| Coupling agent | Amino functional silane coupling agent | 0.7 |
| Surfactant | Fluorinated surfactant | 1.5 |
| Reinforcing agent | 6 mm glass strands | 2.1 |
| Inorganic fibre matrix | Superwool HT^{®} | 1.7 |
| Closed voids reinforcing agent | Hollow thermoplastic microspheres | 1.5 |
| Closed voids reinforcing agent | Hollow glass microspheres | 20.4 |

### Second material (part B)

| **General term** | **Specific example** | **Quantity %(w/w)** |
|---|---|---|
| Hardener | Partial phosphate ester | 60 |
| Cure accelerator | Para toluene sulphonic acid | 20 |
| Fire retardant | Boric acid | 20 |

In this example, the ratio of the first material to the second material (first material : second material) is 4.26:1. Accordingly, the formulation comprises 81% of the first material and 19 % of the second material.

Boric acid acts as a fire retardant inhibiting the spread of flames.

### Outer protective layer

### First Material (part A)

| **General term** | **Specific example** | **Quantity %(w/w)** |
|---|---|---|
| Bio-based resin | Polyfurfuryl alcohol (PFA) resin | 97.1 |
| Coupling agent | Amino functional silane coupling agent | 0.5 |
| Plasticiser | Ethanediol | 0.8 |
| Filler | Fumed silica | 1.6 |

### Second material (part B)

| **General term** | **Specific example** | **Quantity %(w/w)** |
|---|---|---|
| Hardener | Partial phosphate ester | 100 |
| Cure accelerator | Para toluene sulphonic acid | n/a |

In some examples, up to 10 %(w/w) para toluene sulphonic acid may be included in part B.

In this example, the ratio of the first material to the second material (first material : second material) is 12.5:1. Accordingly, the formulation comprises 92.6% of the first material and 7.4 % of the second material.

### Passive fire-resistant structure (Example 2)

Another passive fire-resistant structure was made up of a tie coat, a passive fire-resistant foam layer and an outer protective layer with the following constituents. First and second materials were formed, and mixed together in the following proportions.

### Tie coat

### First material (part A)

| **General term** | **Specific example** | **Quantity %(w/w)** |
|---|---|---|
| Bio-based resin | 50 % (w/w) Lignin solution in NaOH | 68.5 |
| Plasticiser | Ethanediol | 0.7 |
| Anti-cissing agent | Anti-cissing agent | 0.7 |
| Coupling agent | Amino functional silane coupling agent | 0.7 |
| Dispersion aid | Dispersion aid | 0.045 |
| Filler | Fumed silica | 3.1 |
| Reinforcing agent | Solid microspheres | 26 |

### Second material (part B)

| **General term** | **Specific example** | **Quantity %(w/w)** |
|---|---|---|
| Hardener | 1,2,3-Propantriol, homopolymer, | 100 |
| | 2-oxiranylmethyl ether 100 | |

In this example, the ratio of the first material to the second material (first material : second material) is 7:1. Accordingly, the formulation comprises 87.5% of the first material and 12.5 % of the second material.

### Passive fire-resistant foam layer

### First material (part A)

| **General term** | **Specific example** | **Quantity %(w/w)** |
|---|---|---|
| Bio-based resin | 50 % (w/w) Lignin solution in NaOH | 71.1 |
| Smoke suppressor | Triethyl phosphate (TEP) | 5.8 |
| Coupling agent | Amino functional silane coupling agent | 0.6 |
| Reinforcing agent | 6 mm glass strands | 1.9 |
| Inorganic fibre matrix | Superwool HT | 1.5 |
| Closed voids reinforcing agent | Hollow thermoplastic microspheres | 1.3 |
| Closed voids reinforcing agent | Hollow glass microspheres | 17.8 |

### Second material (part B)

| **General term** | **Specific example** | **Quantity %(w/w)** |
|---|---|---|
| Hardener | 1,2,3-Propantriol, homopolymer, 2-oxiranylmethyl ether | 100 |

In this example, the ratio of the first material to the second material (first material : second material) is 4.26:1. Accordingly, the formulation comprises 81% of the first material and 19 % of the second material.

### Outer protective layer

### First Material (part A)

| **General term** | **Specific example** | **Quantity %(w/w)** |
|---|---|---|
| Bio-based resin | 50 % (w/w) Lignin solution in NaOH | 97.1 |
| Coupling agent | Amino functional silane coupling agent | 0.5 |
| Plasticiser | Ethanediol | 0.8 |
| Filler | Fumed silica | 1.6 |

### Second material (part B)

| **General term** | **Specific example** | **Quantity %(w/w)** |
|---|---|---|
| Hardener | 1,2,3-Propantriol, homopolymer, 2-oxiranylmethyl ether | 100 |

In this example, the ratio of the first material to the second material (first material : second material) is 12.5:1. Accordingly, the formulation comprises 92.6% of the first material and 7.4 % of the second material.

In example 2 above, a 50 % (w/w) lignin solution in NaOH was used. In other example, up to an 80% (w/w) lignin solution in NaOH can be used.

In example 2 above, the hardener is an epoxy-based hardener, exemplified by 1,2,3-Propantriol, homopolymer, 2-oxiranylmethyl ether.

Accordingly, in some examples, the bio-based resin comprised in the passive fire-resistant foam layer first material and/or the tie coat first material and/or the outer protective layer first material is a polyfurfuryl alcohol resin. In such examples, the hardener comprised in the passive fire-resistant foam layer second material and/or the tie coat second material and/or the outer protective layer second material is a partial phosphate ester.

In other examples, the bio-based resin comprised in the passive fire-resistant foam layer first material and/or the tie coat first material and/or the outer protective layer first material is a lignin biopolymer. In such examples, the hardener comprised in the passive fire-resistant foam layer second material and/or the tie coat second material and/or the outer protective layer second material is an epoxy-based hardener.

The efficacy of formulations according to the disclosure in relation to the passive fire-resistant foam layer both in terms of cohesion and adhesion and the ease of incorporation and of flow is greatly aided by the presence of suitable surfactants. These can be both temperature and acid stable and soluble in aqueous media. A preferred material is a fluorinated surfactant, i.e., fluorosurfactant. The incorporation of the hollow microspheres into the bio-based resin is also improved by the addition of a fluorinated surfactant.

Glass strands provide reinforcement. Chopped glass strands are typically from 3 to 12 mm long and optimally approximately 6 mm long.

Coupling agents, such as silane coupling agents, are chemicals which enhance adhesion or bonding between fibre surface and polymer matrix.

The hollow glass microspheres of the passive fire-resistant foam layer are hollow glass expanded spheres, which in some examples have an SG of from 0.005 to 0.02, and optimally 0.01. In some examples, the hollow microspheres have an average diameter of between 30 and 200 microns. The solid microspheres in the tie coat may be glass.

In the passive fire-resistant foam layer first material, a combination of hollow glass microspheres and hollow polymeric (thermoplastic) microspheres are provided. Replacing some of the hollow glass microspheres with hollow polymeric microspheres reduces the weight of the passive fire-resistant foam layer, which is beneficial for passive fire-resistant structures. Furthermore, the hollow polymeric microspheres act as a toughener by preventing cracking and reducing internal stress, providing mechanical strength and resiliency to protect against impact.

The inorganic fibre matrix (i.e., ceramic fibres) may be in the form of an insulating felt. An example of an inorganic fibre matrix is mineral wool, for example superwool HT^{®} available from Thermal Ceramics. The inorganic fibre matrix may comprise from 70 to 80 %(w/w) silica, and from 18 to 25 %(w/w) calcium oxide and magnesium oxide. The inorganic fibre matrix is an alkaline earth silicate fibre matrix. The inorganic fibre matrix improves fire resistance.

Structures according to examples of the disclosure can resist both mechanical flexure and thermal expansion of the substrates. This feature is enhanced by the presence in all three layers of the silane coupling agent, and any dispersion aids present which serve to enhance the strength of matrix reinforcement interface.

In some examples, the respective second materials comprise of a solution of a partial phosphate ester, possibly in admixture with accelerating agents, particularly para toluene sulphonic acid or trifluoroethane sulfonic acid, in water.

Structures according to examples of the disclosure were subjected to simulated service testing and shown to have comparable performance to structures based on phenolic resins. Structures according to examples of the disclosure are therefore suitable for protecting on-shore and off-shore substrates relating to and associated with the extraction and processing of crude oil or natural gas from fires and the intense heat emanating from combustion of these materials.

Substrates which require protection from such fire regimes include a large range of equipment, including under decks, bulkheads, heat exchangers, vessels, pipes, saddles and skirts, welding nodes, hot risers, enclosures for riser clamps, ESDVs, and flanges.

Accordingly, structures according to examples of the disclosure provide a solution for protecting vital topside substrates on on-shore and off-shore.

Structures provide jet fire passive fire protection for up to 120 minutes (JF120) and hydrocarbon pool fire passive fire protection up to 180 minutes (H180).

Structures protect against blast over pressure of up to 4.2 bar and are tolerant to temperatures as low as -196°C and as high as 185°C.

In examples comprising an outer protective layer, the outer protective layer can improve the mechanical strength of the structure.

### Method

A passive fire-resistant structure, for instance in relation to examples 1 or 2 above, can be applied onto a substrate such as on-shore or off-shore equipment referred to above. A passive fire-resistant structure can be provided on metallic elements.

The first and second materials of the tie coat are mixed together and pasted onto the substrate using a brush or roller to provide a layer probably 0.15 to 1 mm thick, and optimally to a uniform film thickness of 150 to 300 microns checked using a wet film thickness gauge. This layer is left to green cure. The substrate will typically be of prepared steel. The surface of the substrate may be prepared by cleaning with a suitable solvent, such as methyl ethyl ketone (MEK), isopropanol alcohol IPA, industrial methylated spirits IMS, or acetone.

The tie coat is left to cure until the resin is no longer liquid and has become tacky. The ideal level of tack may be achieved in 15 to 60 minutes depending on the environmental conditions. Low temperatures and high relative humidity will extend the time to tack. High temperatures and low relative humidity will reduce the time to tack.

When ready, the first and second materials of the passive fire-resistant foam layer are mixed together. Mixing may be carried out in a planetary, or similar, dough mixer.

During the application of the passive fire-resistant foam, the material may be shaped into a slab at a thickness in excess of 30 mm. The slab is applied onto the primed substrate (i.e., onto the tie coat) and tamped with a plastic trowel to compress the material onto the substrate and subsequently achieve the required thickness by the smoothing and tamping action.

Alternatively, slabs may be prepared by pressing the material into a rectangular frame of a specified thickness, then when fully consolidated removing the frame and cutting the slabs to size.

For piping spools, the application thickness shall be controlled by using a metric needle gauge, or thickness guide half shell rings. The composite half shells shall be bonded to the substrate with tie coat and become part of the fireproofing structure, i.e., system.

In some examples, the passive fire-resistant foam applied thickness shall be 10 or 30 mm. This is dependent on the required fireproofing rating, and either thickness is achievable in a single coat application.

During application, the wet film thickness can be monitored using metric thickness gauges or by one of the suitable thickness guides listed above.

The passive fire-resistant foam does not shrink volumetrically during cure therefore the wet film thickness will equal the dry film thickness.

In some examples, the passive fire-resistant foam is presented as a paste that may be pumped or sprayed. The paste will flow under gravity and therefore may be cast into moulds. The paste cold cures with very little generation of heat and therefore inexpensive plastic moulds may be used. This means that very large articles can easily be formed.

After approximately 48 hours the outer protective layer is then optionally formed on top of the passive fire-resistant foam layer. The first and second materials of the outer protective layer are mixed together, for example by hand, and then laid onto appropriate fibre reinforcement which may be in the form of tape or cloth in sheet or roll form and could be of glass, Kevlar, carbon or other materials. None limiting examples of fibre reinforcement include biaxial/chopped strand mat (CSM), combination glass cloth (600 gsm biaxial and 225 gsm CSM), or biaxial glass cloth only (450 gsm). The catalysed resin is applied by brush or roller directly to the surface of the cured passive fire-resistant foam layer. The wet film thickness should be in excess of 400 microns. The first layer of fibre reinforcement is then placed on the wet resin and rolled with a metal ribbed roller until the wet resin is worked through the reinforcement eliminating voids and air pockets. This process is repeated until the specified structure, i.e., system is applied.

The outer protective layer would typically be 3 to 5 mm thick. The outer protective layer may be a reinforced outer skin.

In some examples, optimally environmental conditions in the application areas are maintained at a temperature of from 15 to 40 °C, a relative humidity of less than 90 % and a dew point equal to or greater than 3 °C.

Accordingly, examples of the disclosure provide a method of applying a passive fire-resistant structure as described above to a substrate. The method comprises applying the tie coat to the substrate. The method further comprises applying the passive fire-resistant foam layer to the tie coat. Optionally, the method comprises applying an outer protective layer to the passive fire-resistant foam layer.

Examples of the disclosure also provide a substrate having a passive fire-resistant structure thereon as described above, in which the tie coat is bonded to the substrate and the passive fire-resistant foam layer is bonded to the tie coat. Optionally, an outer protective layer is bonded to the passive fire-resistant foam layer.

In some examples, the passive fire-resistant foam layer is a syntactic foam. Syntactic foams are created by filling a resinous matrix with a particle that itself contains a closed void, such as a hollow microsphere, such that the apparent specific gravity of the particulate material is significantly below the true specific gravity of the solid material from which the sphere is made. This property is then imparted to the resinous matrix in proportion to the volume occupied by the hollow particulate spheres. Accordingly, examples of the disclosure provide light weight fire resistant materials, thus minimising the overall weight applied to substrates.

Spherical particles have a reinforcing effect, using the same mechanism as fibrous reinforcements. However spherical reinforcements provide isotropic properties, whereas fibrous or lamina reinforcements provide directional properties.

There is thus described a passive fire-resistant structure, a method of applying a passive fire-resistant structure to a substrate and a protected substrate which provide a number of advantages as described above.

Furthermore, the passive fire-resistant foam layer has good physical properties with or without an outer protective layer, for example a reinforced skin. The passive fire-resistant foam layer is also an excellent insulant.

Examples of the disclosure relate to the manufacture of wet pastes of bio-based resins, which in some examples are expanded with hollow spheres. The subsequent curing of those pastes is normally without the application of external heat, i.e., cold cure, e.g., from 5 to 40°C.

Various other modifications may be made without departing from the scope of the invention. For instance, different materials or different proportions of materials may be used. The viscosity of mixtures may be adjusted by the addition of volatile solvents and/or neutral phosphate plasticisers, such that the wet mixtures can be applied with conventional spray equipment, or can be pumped into moulds and will flow as a casting material.

Whilst endeavouring in the foregoing specification to draw attention to those features of the invention believed to be of particular importance it should be understood that the Applicant claims protection in respect of any patentable feature or combination of features hereinbefore referred to whether or not particular emphasis has been placed thereon.

## Claims

1. A passive fire-resistant structure for a substrate, the structure comprising:
a tie coat bonded to the substrate; and
a passive fire-resistant foam layer bonded to the tie coat, wherein the passive fire-resistant foam layer is the reaction product of a first material comprising a bio-based resin and a second material comprising a hardener.

2. A passive fire-resistant structure according to claim 1, wherein the passive fire-resistant foam layer first material comprises from 45 to 85 %(w/w) of the bio-based resin.

3. A passive fire-resistant structure according to claim 1 or 2, wherein the passive fire-resistant foam layer second material comprises from 50 to 100 %(w/w) of the hardener.

4. A passive fire-resistant structure according to any of the preceding claims, wherein the passive fire-resistant foam layer first material comprises up to 2 %(w/w) of an amino functional silane coupling agent.

5. A passive fire-resistant structure according to any of the preceding claims, wherein the passive fire-resistant foam layer first material comprises up to 5 %(w/w) glass strands.

6. A passive fire-resistant structure according to any of the preceding claims, wherein the passive fire-resistant foam layer first material comprises from 10 to 30 %(w/w) hollow microspheres

7. A passive fire-resistant structure according to any of the preceding claims, wherein the passive fire-resistant foam layer first material comprises up to 15 %(w/w) of a smoke suppressor.

8. A passive fire-resistant structure according to any of the preceding claims, wherein the passive fire-resistant foam layer first material comprises from 0.2 to 5 %(w/w) fluorinated surfactant.

9. A passive fire-resistant structure according to any of the preceding claims, wherein the tie coat is the reaction product of a first material comprising a bio-based resin and a second material comprising a hardener, wherein, optionally, the passive fire-resistant structure comprises an outer protective layer bonded to the passive fire-resistant foam layer.

10. A passive fire-resistant structure according to claim 9, wherein the passive fire-resistant structure comprises an outer protective layer bonded to the passive fire-resistant foam layer, and wherein the outer protective layer is the reaction product of a first material comprising a bio-based resin and a second material comprising a hardener.

11. A passive fire-resistant structure according to any of the preceding claims, wherein the bio-based resin comprised in the passive fire-resistant foam layer first material is a polyfurfuryl alcohol resin and the hardener comprised in the passive fire-resistant foam layer second material is a partial phosphate ester, or wherein the bio-based resin comprised in the passive fire-resistant foam layer first material is a lignin biopolymer resin and the hardener comprised in the passive fire-resistant foam layer second material is an epoxy-based hardener.

12. A passive fire-resistant structure according to claim 9, wherein the bio-based resin comprised in the tie coat first material is a polyfurfuryl alcohol resin and the hardener comprised in the tie coat second material is a partial phosphate ester, or wherein the bio-based resin comprised in the tie coat first material is a lignin biopolymer resin and the hardener comprised in the tie coat second material is an epoxy-based hardener.

13. A passive fire-resistant structure according to claim 10, wherein the bio-based resin comprised in the outer protective layer first material is a polyfurfuryl alcohol resin and the hardener comprised in the outer protective layer second material is a partial phosphate ester, or wherein the bio-based resin comprised in the outer protective layer first material is a lignin biopolymer resin and the hardener comprised in the outer protective layer second material is an epoxy-based hardener.

14. A method of applying a passive fire-resistant structure to a substrate, the method comprising:
applying a tie coat to the substrate; and
applying a passive fire-resistant foam layer to the tie coat, wherein the passive fire-resistant foam layer is the reaction product of a first material comprising a bio-based resin and a second material comprising a hardener.

15. A substrate having a passive fire-resistant structure thereon, wherein the passive fire-resistant structure comprises:
a tie coat bonded to the substrate; and
a passive fire-resistant foam layer bonded to the tie coat, wherein the passive fire-resistant foam layer is the reaction product of a first material comprising a bio-based resin and a second material comprising a hardener.
